# EUROPÄISCHE PATENTANMELDUNG

(11) **EP 1 291 669 A1**
(43) Veröffentlichungstag der Anmeldung: **12.03.2003**
(21) Anmeldenummer: 02450192.6
(22) Anmeldetag: 02.09.2002
(51) Int. Cl.: G01S 13/00, G01S 13/88, G01S 13/10

(54) **Vorrichtung und Verfahren Zum Aufzeigen von Inhomogenitäten in zumindest einer schneeschichte**

(30) Priorität: 05.09.2001 AT 14012001
(71) Anmelder: Österreichische Bundesbahnen, 1010 Wien (AT); Ground Control Geophysik + Consulting GmbH, 80335 München (DE)
(72) Erfinder: Woditsch, Michael, Dipl.-Ing., 1200, Wien (AT); Staccone, Giuseppe, Diplom Geophysiker, 81247, München (DE)
(74) Vertreter: Widtmann, Georg, Dipl.-Ing. Dr. techn.

(57) **Zusammenfassung**

Vorrichtung zum Aufzeigen von Inhomogenitäten in zumindest einer Schneeschichte mit einem Sender (S) mit Antenne (AS) für elektromagnetische Wellen, insbesondere mit einer Frequenz von 0,1 Gigahertz bis 10 Gigahertz, und einem Empfänger (E) mit Antenne (AE) für die von den Inhomogenitäten reflektierten gerichteten Wellen, wobei die Antenne (AS) des Senders (S) und die des Empfängers (E) örtlich voneinander getrennt sind, wobei die Antenne (AS) des Senders (S) schwenkbar ist, und dem Sender (S) und/oder Empfänger (E) ein Ortsdetektor, z. B. Odometerrad, global positioning system (GPS), Trägheitsnavigator, zugeordnet ist/ sind.

Zur Veröffentlichung gemeinsam mit der Zusammenfassung ist Fig. 6 bestimmt.

## Beschreibung

Die Erfindung hat eine Vorrichtung sowie ein Verfahren zum Aufzeigen von Inhomogenitäten in zumindest einer Schneeschichte zum Gegenstand.

Schneeschichten können eine Bedrohung von Zivilisation und Natur, sei es von Wohngebieten, Verkehrswegen, Wäldern od. dgl. darstellen. Schnee ist in beiden angeführten Gebieten eine potentielle Gefahr, wobei aus Gründen des Platzbedarfes bzw. der optimalen Streckenführung die Wahrscheinlichkeit eines Risikos einer Lawine berücksichtigt wird.

Die Struktur von Schneeschichten und die darin enthaltenen Fremdkörper sind von zweifachem Interesse. Einerseits stellt die unterschiedliche Ablagerung von Schnee aus der Atmosphäre eine potentielle Gefahr dar. Je nach Haftung der Schneeschichten auf dem Untergrund, beispielsweise Wiese, Fels, Harsch, Pulverschnee, kann die Wahrscheinlichkeit einer Schneelawine, beispielsweise Naßlawine, Staublawine, beurteilt werden. Andererseits ist es nach Abgang einer derartigen Lawine von besonderer Bedeutung, Fremdkörper, insbesondere Lebewesen, in der neu sekundär abgelagerten Schneeschichte zu orten.

Zur Ortung von Menschen ist es bekannt, dieselben mit einem Sender für elektromagnetische Wellen auszustatten. Nach Verschüttung dieser Personen in einer Schneelawine ist es erforderlich, entsprechende Signale zu orten und sodann für die Bergung dieser Personen Rechnung zu tragen. Voraussetzung hierfür ist allerdings, daß die potentiell gefährdeten Personen mit einem entsprechenden Sender ausgestattet sind und sodann eine Ermittlung in den entsprechenden Frequenzen stattfindet. Das bislang zumeist ausgeübte Verfahren zur Dedektierung von Personen mit oder ohne Sender besteht darin, daß über mechanische Sonden, beispielsweise dünne Stäbe, Inhomogenitätsstellen im Schnee ermittelt werden, welche einen entsprechenden Hinweis auf Personen geben können. Eine derartige Sondierung in einer Lawine kann durch Hunde mit einem ausgeprägten Geruchssinn zur Lozierung der Opfer unterstützt werden.

Von besonderer Bedeutung ist die vorbeugende Beurteilung von Schneeschichten, wobei bislang die subjektive Beurteilung noch nicht ersetzt werden konnte. Hierbei wird ein Profil von der Oberfläche bis zum festen Untergrund, Erde, Fels od. dgl., abgegraben, und es werden die einzelnen Schichten beispielsweise auf ihre Verdichtungsfähigkeit und auch Verbund untereinander untersucht. Liegt beispielsweise eine Pulverschneeschichte auf einer Harschschneeschichte auf, so kann ab einer bestimmten Hangneigung mit einer Lawine gerechnet werden.

Aus der EP 0 172 445 A1 wird eine Uhr mit einem Armband bekannt, das einen Sender zur Lozierung von Lawinenopfern aufweist.

In der EP 0 075 199 A1 wird ein Verfahren und eine Vorrichtung zum Orten von Verschütteten beschrieben, bei welchem zwei gebündelte elektromagnetische Hochfrequenzenergiestrahlen mit weit auseinanderliegenden Frequenzen in das Erdreich gestrahlt werden. Die an der Grenzfläche zwischen Erdreich und Lebewesen reflektierten Strahlenanteile werden empfangen, verstärkt, entsprechend der charakteristischen Reflexionseigenschaften der Grenzfläche zwischen Erdreich und Lebewesen bewertet, und zur Anzeige gebracht.

Nachteilig bei den bislang bekannten Verfahren und Vorrichtungen zur Beurteilung von Schneeschichten und gegebenenfalls darin enthaltenen Inhomogenitäten ist, daß lediglich eine zweidimensionale Beurteilung durchgeführt wird. Diese zweidimensionalen Beurteilungen weisen den Nachteil auf, daß benachbarte Regionen nicht berücksichtigt werden und somit insbesondere unterhalb von Inhomogenitätsstellen keine Informationen erhalten werden können.

Der vorliegenden Erfindung ist zur Aufgabe gestellt, ein Verfahren und eine Vorrichtung zu schaffen, das bzw. die es erlaubt, Inhomogenitätsstellen sowohl in primär abgelagerten Schneeschichten als auch in sekundär abgelagerten Schneeschichten zu ermitteln, wobei zusätzlich zur vertikalen zweidimensionalen Struktur in Form eines vertikalen Schnittbildes auch eine räumliche Erfassung der Inhomogenitätsstellen durch Korelation der Meßdaten ermöglicht ist, und auch unter Inhomogenitätsstellen, z. B. Lebewesen, weitere Inhomogenitäten erfaßt werden können. Auch soll ermöglicht werden, Messungen an unebenen Flächen vorzunehmen.

Die Inhomogenität innerhalb einer Schneeschichte beginnt teilweise schon während des Schneefalles, besonders wenn die Niederschlagstemperatur stark wechselt oder höhere Windgeschwindigkeiten auftreten. Hauptsächlich jedoch entstehen die deutlich erkennbaren Schichtungen durch die nachträglichen Veränderungen während der Schneefallpausen und Verfrachtungsperioden. Je länger derartige Intervalle dauern, desto nachhaltiger können sich die meteorologischen Einflüsse auswirken und um so stärker werden die dauernden Umwandlungen, die sowohl im Inneren als auch an den Oberflächen der Ablagerungen stattfinden, fortschreiten. Die Schichtung, die Schichtbeschaffenheit und die Art des Schichtverbandes sind die Hauptursachen für die Gleitvorgänge von denen die Schneeablagerungen ergriffen werden. Die Zustandsveränderungen erfolgen durch Gefrieren aus Wasserdampf und flüssigem Wasser sowie durch Verdampfung und Schmelzung. Als Schichtgrenzen treten Verfestigungen durch Gefrieren oder Schmierschichtbildungen durch Schmelz- und Regenwasser auf. Diese Trennlinien können für nachfolgende Schichtpakete zum Gleithorizont werden. Ebenso können sich Schichtungen entwickeln, weil die Schneekristalle durch den Temperaturgradienten innerhalb der Schneedecke ungleichmäßig gelockert werden.

Besonders starke Inhomogenitäten treten in den Wächtenbereichen und in deren Windschatten auf. Auf der Luvseite werden bei Starkwind die Stromlinien zusammengedrückt, es entsteht eine Steigerung der Strömungsgeschwindigkeit und einzelne Schneeteilchen werden los- und mitgerissen. Nach dem Kantenabriß breiten sich in Lee die Stromlinien aus, wobei die bodennahen Stromlinien einen Luftwirbel bilden, der den Wächtenaufbau entlang der Kammlinie bewirkt. Durch den Winddruck und wegen der raschen Gefrierfähigkeit des Schnees entsteht eine Wächte. Die bodenferneren Stromlinien gleiten über die Wächte hinweg und lagern die Schneefracht vorerst als Lockermaterial ab.

Das Abgleiten der Schneeschichten wird begünstigt:
- je geringer die Setzung nach dem Schneefall ist
- je lockerer die Schneeablagerung nach der Verfrachtung ist
- je glatter und steiler die Unterlage des lawinengefährlichen Hanges ist
- je größer eine nachträgliche Auflockerung in einer schon verfestigten Schneedecke erfolgt
- je größer die Spannungsverhältnisse innerhalb einer windgepreßten Schneedecke sind
- je stärker der Schnee durchfeuchtet ist
- je stärker die Schneedecke an kritischen Stellen durchschnitten bzw. belastet wird.
- je inhomogener eine Schneedecke ist.

Die erfindungsgemäße Vorrichtung zum Aufzeigen von Inhomogenitäten in zumindest einer Schneeschichte mit einem Sender mit Antenne für elektromagnetische Wellen, insbesondere mit einer Frequenz von 0,1 Gigahertz bis 10 Gigahertz, und einem Empfänger mit Antenne für die von den Inhomogenitäten reflektierten gerichteten Wellen, wobei die Antenne des Senders und die des Empfängers örtlich voneinander getrennt sind, besteht im wesentlichen darin, daß die Antenne des Senders schwenkbar ist, und dem Sender und/oder Empfänger ein Ortsdetektor, z. B. Odometerrad, global positioning system (GPS), Trägheitsnavigator, zugeordnet ist/sind. Durch die Trennung der Antennen für den Sender von dem Empfänger und der Ortsidentifizierung kann erreicht werden, daß nicht nur die obere Inhomogenitätsstelle ermittelt wird, sondern unterhalb derselben liegenden Schichte mit nur einer Frequenz erfaßt und dargestellt werden können. Dadurch kann eine bessere Erfassung von Inhomogenitätsstellen erreicht werden, da nicht nur vermutliche Unterschiede in einer vertikalen Ebene ermittelt werden, sondern auch räumlich in engen Bereichen begrenzte Inhomogenitätsstellen, wie beispielsweise Lebewesen, insbesondere Menschen, räumlich erfaßt und auch dargestellt werden können. Durch das Schwenken der Antenne des Senders können mehrere Meßergebnisse für einen Meßpunkt von unterschiedlichen Meßorten erhalten werden, die sodann in Korelation gesetzt werden. Weiters kann z. B. bei Messung von einer zerklüfteten Schneefläche aus der Strahl genau ausgerichtet werden.

Ist die Antenne des Empfängers schwenkbar, so kann selbst bei stationärer Lage der Antenne des Senders eine partielle räumliche Abbildung der Inhomogenitätsstellen erreicht werden.

Ist ein Speicher, insbesondere eine Aufzeicheneinrichtung, für die erforderliche Zeit der reflektierten elektromagnetischen Wellen vom Sender zur Inhomogenität und zum Ort des Empfängers und gegebenenfalls für die erforderliche Zeit der elektromagnetischen Wellen von der Senderantenne und zu dieser zurück, vorgesehen, so kann auf besonders einfache Art und Weise eine Ermittlung einer oder der Inhomogenitätsstelle(n) erfolgen, wobei eine Identifizierung sowohl vom Ort des Senders als auch vom Ort des Empfängers ermöglicht ist.

Weisen die Antenne des Senders und des Empfängers zueinander einen gleichbleibenden Abstand auf, so ist besonders einfach die örtliche Ermittlung von Inhomogenitätsstellen ermöglicht, da die Entfernung der beiden Antennen zueinander eine Konstante darstellt.

Ein besonders geringer Aufwand ist dann gegeben, wenn der Sender und der Empfänger einen gemeinsamen elektrischen Verstärker und gegebenenfalls Datenverarbeitungsanlage aufweisen.

Das erfindungsgemäße Verfahren zum Aufzeigen von Inhomogenitäten in, zumindest nur, einer Schneeschichte, wobei von einem Sender elektromagnetische Wellen, insbesondere mit einer Frequenz von 0,1 Gigahertz bis 10 Gigahertz, ausgestrahlt werden, und von einem Empfänger für die reflektierten Wellen dieselben empfangen werden, und eine Zeit zwischen Abgang der elektromagnetischen Wellen und Empfang derselben gemessen wird, besteht im wesentlichen darin, daß zusätzlich der Abstand zwischen der Antenne des Senders und der des Empfängers sowie die relative Winkellage der Antenne des Senders und/oder Empfängers und/oder die Zeit der ausgesandten Wellen bis zur Rückkehr zum Sender bestimmt wird/werden. Durch die Trennung der Antennen von Sender und Empfänger wird ermöglicht, daß eine räumliche Darstellung von Inhomogenitätsstellen erfolgt, wobei durch die Ermittlung der Winkellage der Antennen ein zusätzlicher Parameter für die örtliche Bestimmung gegeben ist, die durch Bestimmung der Zeit, die die Wellen vom Sender zur Inhomogenitätsstelle und zurück benötigt, ersetzt werden kann.

Wird die Antenne des Senders und/oder des Empfängers, gegebenenfalls gemeinsam mit dem Sender und/oder Empfänger oberhalb und entlang der Schneeschichte, z. B. mit einem Schlitten, Hubschrauber, bewegt, so kann rasch ohne Auslösen von Lawinen ein Profil der Inhomogenitäten erstellt werden.

Wird die Frequenz der vom Sender ausgesandten Wellen, insbesondere stufenweise, geändert und mit dem Empfänger die Signale dieser Wellenlänge empfangen, so kann aufgrund des unterschiedlichen Reflexionsverhaltens von Inhomogenitätsstellen bezüglich der Frequenz eine zusätzliche Information erhalten werden. Weiters kann auf einfache Weise die Zeit bekannt werden, welche die Wellen einer Frequenz vom Sender zum Empfänger benötigt, da einerseits der Zeitpunkt, zu welchem begonnen wird, Wellen mit einer bestimmten Frequenz zu senden und andererseits der Zeitpunkt, zu welchem diese Wellen reflektiert von einer Inhomogenität am Empfänger einlangen, bestimmt werden kann.

Werden die Wellen zeitlich unterbrochen ausgesandt, so kann die Energieversorgung des Senders für längere Zeiträume sichergestellt werden, wobei weiters Störungen, die beispielsweise kontinuierlich ausgehen, einfach ermittelt und bei der Auswertung ausgeschieden werden können.

Wird die Temperatur der Oberfläche gemessen, so ist ein zusätzlicher Parameter zur Beurteilung der Schneeschichten gegeben.

Werden die Meßwerte unterschiedlicher Frequenzen mit den Meßwerten gleicher Frequenzen verglichen, so kann aufgrund des unterschiedlichen Reflexionsverhaltens von Inhomogenitätsstellen auf deren Eigenschaften Rückschluß gezogen werden. So kann beispielsweise aufgrund der unterschiedlichen Dielektrizitätskonstanten von Pulverschnee, Harsch, Lebewesen auf die Beschaffenheit derselben ein Rückschluß gezogen werden.

Im folgenden wird die Erfindung anhand der Zeichnungen näher erläutert.

Es zeigen:
- Fig. 1: in schematischer Darstellung den Aufbau eines Senders sowie eines Empfängers,
- Fig. 2: einen Schnitt durch Schneeschichten,
- Fig. 3: die dem Schnitt gemäß Fig. 2 entsprechenden Laufzeiten der elektromagnetischen Strahlen,
- Fig. 4: die schematische Darstellung einer Aufnahme eines Verschütteten,
- Fig. 5: die Laufzeiten der elektromagnetischen Strahlen in unterschiedlichen Abständen zum Verschütteten gemäß Fig. 4 und
- Fig. 6: die Anordnung zur Erfassung von zwei untereinanderliegenden Inhomogenitäten in Schneeschichten.

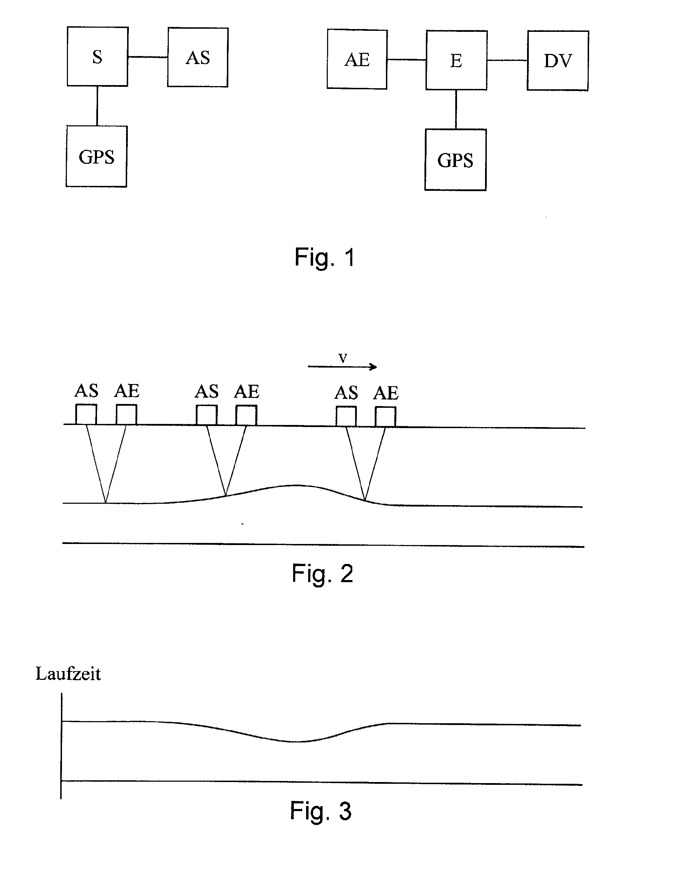

Die in Fig. 1 dargestellten Anordnungen bestehen aus einer Sendereinheit und einer Empfängereinheit. Die Sendereinheit weist einen Sender S der elektromagnetischen Wellen mit einer Frequenz zwischen 0,1 Gigahertz und 10 Gigahertz aussenden kann, ein global positioning system GPS, das über Satelliten den genauen Standort der Antenne AS ermitteln kann, sowie eine Antenne AS, die in an sich bekannter Weise mechanisch, elektrisch oder elektronisch schwenkbar ausgebildet ist, so daß das Maximum der abgesandten elektromagnetischen Strahlen genau gerichtet werden kann. Eine derartige Antenne kann beispielsweise elektrisch fokusierend sein. Die Empfängereinheit weist einen Empfänger E und ebenfalls eine Antenne AE auf, mit welcher sowohl die Lokalposition der Senderantenne AS als auch die Position der Empfängerantenne AE über GPS ermittelt, und die Zeiten sowie die Winkellage der Antennen aufgenommen werden. Die Empfängerantenne AE kann auch mechanisch, elektrisch oder elektronisch schwenkbar ausgebildet sein. Diese Daten werden in die Datenverarbeitungsanlage DV eingegeben, dort gespeichert und gegebenenfalls verarbeitet. Für Sender und Empfänger kann ein gemeinsamer Verstärker vorgesehen sein. Die Meßergebnisse für einen Meßpunkt von verschiedenen Orten können in Korealition gesetzt werden, wodurch besonders genaue Ergebnisse erhalten werden.

Die Geschwindigkeiten von elektromagnetischen Wellen im Schnee hängen von der Dielektrizitätskonstante des jeweiligen Schnees ab, somit, ob ein trockener Schnee, ein nasser Schnee oder auch eine Eisschichte vorliegt. Zur genauen örtlichen Ermittlung von Inhomogenitätsstellen ist es erforderlich, vorab die Ausbreitungsgeschwindigkeit der elekromagnetischen Wellen im durchzulaufenden Medium zu bestimmen. Hierzu gibt es verschiedene Verfahren, die im wesentlichen gleichwertig zueinander sind. So kann bei einem bekannten Abstand zwischen Senderantenne AS und Empfängerantenne AE und vorgegebenem Winkel zur Abstrahlung und zum Empfang elektromagnetischer Wellen nach einer Positionierung von Senderantenne und Empfängerantenne, gegebenenfalls nach zwei Positionierungen derselben, die Laufzeit in der Schneeschichte ermittelt werden. Die örtliche Positionierung kann hierbei über unterschiedliche Systeme, wie beispielsweise Odometerrad, Trägheitsnavigation bevorzugt über GPS erfolgen. Der Wirkwinkel der Antenne des Senders AS und des Empfängers AE zur Horizontalen kann mit entsprechenden elektrischen Sensoren, beispielsweise auf Basis eines Kondensators mit darin enthaltenen dielektrischer Flüssigkeit, welcher je nach Neigung seine Kapazität ändert, erfaßt werden. Zur Bestimmung der Zeit, die ein vom Sender ausgesandtes Signal benötigt, bis es zum Empfänger gelangt, kann beispielsweise ein derartiges Signal in großen Zeitabständen abgegeben werden, daß zwischen Abgabe des Signales und Empfang des Signales keine weiteren Signale abgegeben werden, oder auch, wenn ein beschleunigtes Vorgehen erforderlich ist, besteht die Möglichkeit, daß die Frequenz der vom Sender abgegebenen Signale, z. B. stufenweise, geändert wird, so daß bereits die Frequenz ein Charakteristikum für den Zeitpunkt der Abgabe der Signale darstellt und lediglich die Zeit vom Abgang der Signale mit einer bestimmten Frequenz und Ankunft der Signale mit einer bestimmten Frequenz bestimmt werden muß. Auch kann ein Vergleich der Zeiten von Strahlen mit gleicher und unterschiedlicher Frequenz durchgeführt werden.

Ein weiteres Verfahren zur Bestimmung der Ausbreitungsgeschwindigkeit besteht darin, daß vorab der Abstand einer Inhomogenität zur Senderantenne bestimmt wird und sodann die Zeitspanne bestimmt wird, welche ein Signal von der Senderantenne zur Inhomogenität und gegebenenfalls zurück oder auch zur Empfängerantenne benötigt. Es wird nach dem Radar-Prinzip gearbeitet.

Nach Bestimmung der Geschwindigkeit der elektromagnetischen Wellen in der jeweiligen Schneeschichte können die Antenne AS des Senders S und des Empfängers AE, wie in Fig. 2 dargestellt, insbesondere mit einer gleichmäßigen Geschwindigkeit gemäß Pfeil v über die Schneeschichten bewegt werden. Ein derartiges Bewegen kann beispielsweise dadurch erfolgen, daß sowohl die Antenne des Senders AS als auch des Empfängers AE in einem getrennten oder auch in einem gemeinsamen Schlitten angeordnet sind. Von besonderer Bedeutung ist, wenn die beiden Antennen in einem Hubschrauber angeordnet sind, wobei eine vorgegebene Entfernung der Antennen vorliegen kann. So besteht die Möglichkeit, die Senderantenne AS im vorderen Bereich und die Empfängerantenne AE im hinteren Bereich des Hubschraubers anzuordnen. Damit kann beispielsweise eine Entfernung von beiden Antennen von 10 m eingehalten sein. Eine schwenkbare Lagerung der Antennen im Hubschrauber ist besonders einfach möglich.

In Fig. 3 ist ein Diagramm der Laufzeiten der elektromagnetischen Wellen bei einem Profil gemäß Fig. 2 dargestellt, womit erkennbar ist, daß eine besonders genaue Wiedergabe möglich ist.

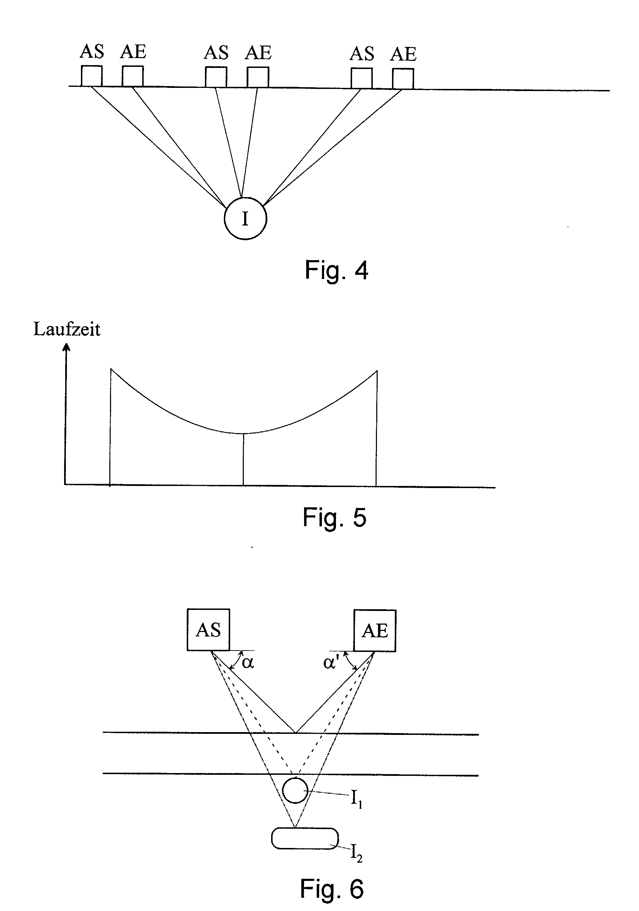

Wie in Fig. 4 ersichtlich, können durch unterschiedliche Positionierungen sowohl der Senderantenne AS als auch Empfängerantenne AE jeweils eine genaue Positionierung einer Inhomogenität vorgenommen werden. Aufgrund der unterschiedlichen Entfernungen zur Inhomogenität I liegen unterschiedlich lange Zeiten, die die elektromagnetischen Wellen vom Sender zum Empfänger zurücklegen, vor. Entsprechend der Bewegung des Senders und Empfängers über die Inhomogenität liegt eine Hyperbelfunktion für die Laufzeiten vor (Fig. 5).

Wie in Fig. 6 dargestellt, kann auch mit ein und derselben Ortsposition der Antennen für den Sender AS und Empfänger AE lediglich durch Schwenken derselben ein Maximum der Intensität bei einem entsprechenden Winkel α bzw. αʹ ermittelt werden. Durch Verkleinern oder Vergrößern der Winkel kann man, wie in Fig. 6 besonders deutlich ersichtlich, auch eine räumliche Erfassung von Inhomogenitäten durchführen, da die Strahlen auch unter einer Inhomogenitätsstelle I₁ auf eine weitere Inhomogenitätsstelle I₂ stoßen können. Diese Inhomogenitätsstellen können beispielsweise Baumstämme, Lebewesen sein.

Zur Unterstützung der Beurteilung der Schneeschichten kann auch die Temperatur an der Oberfläche ermittelt werden.

## Patentansprüche

1. Vorrichtung zum Aufzeigen von Inhomogenitäten in zumindest einer Schneeschichte mit einem Sender (S) mit Antenne (AS) für elektromagnetische Wellen, insbesondere mit einer Frequenz von 0,1 Gigahertz bis 10 Gigahertz, und einem Empfänger (E) mit Antenne (AE) für die von den Inhomogenitäten reflektierten gerichteten Wellen, wobei die Antenne (AS) des Senders (S) und die des Empfängers (E) örtlich voneinander getrennt sind, **dadurch gekennzeichnet, daß** die Antenne (AS) des Senders (S) schwenkbar ist, und dem Sender (S) und/oder Empfänger (E) ein Ortsdetektor, z. B. Odometerrad, global positioning system (GPS), Trägheitsnavigator, zugeordnet ist/ sind.

2. Vorrichtung nach Anspruch 1, **dadurch gekennzeichnet, daß** die Antenne (AE) des Empfängers (E) schwenkbar ist.

3. Vorrichtung nach Anspruch 1 oder 2, **dadurch gekennzeichnet, daß** ein Speicher, insbesondere eine Aufzeicheneinrichtung, für die erforderliche Zeit der reflektierten elektromagnetischen Wellen vom Sender (S) zur Inhomogenität (I) und zum Ort des Empfängers (E) und gegebenenfalls für die erforderliche Zeit der elektromagnetischen Wellen von der Senderantenne (AS) und zu dieser zurück, vorgesehen ist.

4. Vorrichtung nach Anspruch 1, 2 oder 3, **dadurch gekennzeichnet, daß** die Antenne (AS) des Senders (S) und des Empfängers zueinander einen gleichbleibenden Abstand aufweisen.

5. Vorrichtung nach einem der Ansprüche 1 bis 4, **dadurch gekennzeichnet, daß** der Sender (S) und der Empfänger (E) einen gemeinsamen elektrischen Verstärker und/oder Datenverarbeitungsanlage (DV) aufweisen.

6. Verfahren zum Aufzeigen von Inhomogenitäten in, zumindest nur, einer Schneeschichte, wobei von einem Sender (S) elektromagnetische Wellen, insbesondere mit einer Frequenz von 0,1 Gigahertz bis 10 Gigahertz, ausgestrahlt werden, und von einem Empfänger (E) für die reflektierten Wellen dieselben empfangen werden, und eine Zeit zwischen Abgang der elektromagnetischen Wellen und Empfang derselben gemessen wird, insbesondere mit einer Vorrichtung nach einem der Ansprüche 1 bis 5, **dadurch gekennzeichnet, daß** zusätzlich der Abstand zwischen der Antenne (AE) des Senders (S) und der des Empfängers (E) sowie die relative Winkellage der Antenne (AS) des Senders (S) und/oder Empfängers (E), insbesondere bezogen auf die Horizontale und/oder die Zeit der ausgesandten Wellen bis zur Rückkehr zum Sender (S), bestimmt wird/ werden.

7. Verfahren nach Anspruch 6, **dadurch gekennzeichnet, daß** die Antenne (AS, ES) des Senders (S) und/oder Empfängers (E), gegebenenfalls gemeinsam mit dem Sender (S) und/oder Empfänger (E), oberhalb und entlang der Schneeschichte, z. B. mit einem Schlitten, Hubschrauber, bewegt wird.

8. Verfahren nach Anspruch 6 und 7, **dadurch gekennzeichnet, daß** die Frequenz der vom Sender (S) ausgesandten Wellen, insbesondere stufenweise, geändert wird, und mit dem Empfänger (E) die Signale dieser Wellenlängen empfangen werden.

9. Verfahren nach einem der Ansprüche 6, 7 oder 8, **dadurch gekennzeichnet, daß** die Wellen zeitlich unterbrochen ausgesandt werden.

10. Verfahren nach einem der Ansprüche 6, bis 9, **dadurch gekennzeichnet, daß** die Temperatur der Oberfläche der Schneeschichte gemessen wird.

11. Verfahren nach einem der Ansprüche 6 bis 10, **dadurch gekennzeichnet, daß** die Meßwerte der unterschiedlichen Frequenzen mit Meßwerten gleicher Frequenz verglichen werden.
